# EUROPEAN PATENT APPLICATION

(11) **EP 4 328 004 A1**
(43) Date of publication of application: **28.02.2024**
(21) Application number: 23190378.2
(22) Date of filing: 08.08.2023
(51) Int. Cl.: B29C 45/28, B29C 45/27

(54) **ACTUATOR FOR INJECTION MOLDING**

(30) Priority: 24.08.2022 IT 202200017511
(71) Applicant: Inglass S.p.A., 31020 San Polo di Piave (Treviso) (IT)
(72) Inventor: Dario, Alessandro, 31020 San Polo di Piave (TV) (IT); Rossi, Massimo, 31020 San Polo di Piave (TV) (IT)
(74) Representative: Citron, Massimiliano

(57) **Abstract**

An actuator to regulate the flow of molten plastic material exiting a nozzle to a mold cavity is described. The actuator comprises a body defining an inner chamber with an outlet; a piston translatable linearly in the chamber to actuate a shutter; an electric switch to detect a limit switch of the piston; a lever to activate the switch according to the position of the piston; and a heat sink mounted on the body at a side of the body opposite said outlet.

## Description

The invention relates to an actuator for injectors of hot runners, used to enable the pressurized injection of molten plastic material into cavities of a mold for the production of objects. Specifically, the invention relates to an actuator equipped with electrical switches to determine end-of-travel positions and/or with a passive cooling device.

The well-known actuators in the injection field, see CN204109273, have a body that defines an inner chamber and a piston that is linearly translatable within the inner chamber. The piston drives the shutter of the injection nozzle, directly connected to it, to the open and closed position, respectively. Actuators of the type shown in CN204109273, are mounted above the heated distributor *(manifold)* and work under high temperature conditions. Hence the need to cool them, and as in CN204109273 a liquid-cooled plate (typically water-cooled) is placed under the actuator, with dedicated hydraulics.

The problem with these structures is that during operation the cooling plate is inefficient because it is far from the inner chamber and piston.

The liquid used inside the cooling plate is usually pressurized water. Frequently, there are leaks and problems with the ducts (clogging or restriction of the ducts) due to impurities in the water, which at high temperature crystallize and adhere to the duct walls. Frequent maintenance is indispensable.

In addition, the high temperature that characterizes the actuator and the environment around it also causes malfunction of the electrical part that makes up the end-of-travel device. It requires the use of special components, resistant to high temperatures, with a considerable increase in cost. As evidence of the poor effectiveness of the described system, CN204109273 involves the use of an insulating wall interposed between the actuator and the micro-switch.

The main object of the invention, defined in the attached claims in which the dependent ones define advantageous variants, is to improve this state of the art.

Particular object is to improve the resilience to thermal stresses of such an actuator.

Another particular object is to improve the thermal protection of electrical parts of the actuator, e.g. its end-of-travel switches.

At least one object is achieved by an actuator for regulating the flow of molten plastic material exiting a nozzle toward a mold cavity, comprising:
a body that defines an inner chamber with an outlet toward the outside of the body,
a piston that is linearly translatable within the inner chamber along an axis and has a stem coming out of said outlet to drive a shutter of the nozzle;
an electric switch for detecting an end-of-travel position of the piston;
a lever that is integral to the stem and extends up to the switch to activate or deactivate it as a function of the position of the piston,
a heat-sink mounted on the body at one side of the body opposite said outlet.

Preferably, for good thermal conduction the heat-sink comprises a flat plate and
a skirt that
extends orthogonally to the plate and
defines a cavity in which said opposite side is housed.

Preferably the heat-sink is displaceable relative to the actuator along said axis.

Preferably, for good thermal conduction the skirt is conformed to surround said opposite side over at least 90 degrees around said axis (i.e. on one side), more preferably on at least 270 degrees.

In an advantageous variation, which improves the thermal protection of the switch, the skirt is conformed to extend along the body interposing between the body and the switch.

Preferably, to simplify assembly, the flat plate has a flat surface that
faces the outside of the actuator and
comprises one or more magnets to allow the flat surface to attach to a metal object (e.g. a main plate of the mold).

The actuator may comprise only one electric switch or two, wherein each switch detects an end-of-travel position of the switch, respectively.

Preferably, a or each switch is attached externally to the body via fastening means. More preferably, a or each switch is mounted on a support plate that is in turn attached to the body via, e.g., 90-degree curved extensions or fins provided on the support plate. To aid the kinematics of the lever and/or the lever-switch interaction, the support plate preferably has a pass-through opening at its center, into which a portion of the lever can slide and on one side or edge of which the switch is attached. If there are two switches, they are attached on opposite sides of the pass-through opening.

Preferably, the lever is in one piece for construction convenience.

Preferably, the lever comprises or consists of a succession of portions which are curved at 90-degree in alternating coplanar directions that form a stepped structure. This keeps the total bulk of the actuator small and allows the lever to be used by taking advantage of very narrow or tortuous passage spaces.

Preferably, the lever comprises a free end that is movable in correspondence of the switch, or the switches if there are two, said free end comprising a cam. Specifically, the cam is a widening of the lever width located at the free end.

Another aspect of the invention is a heat-disposal system for an actuator as defined above, comprising:
an actuator as defined above,
a heat-sink as defined above,
a mold plate against which the heat sink is abutted.

The system shares the variants of the actuator.

The advantages of the invention will be even clearer from the following description of a preferred actuator, in which
- Fig. 1 shows in cross-section a three-dimensional view of the actuator;
- Fig. 2 shows a side view of the actuator in Fig. 1;
- Fig. 3 shows a different side view of the actuator in Fig. 1;

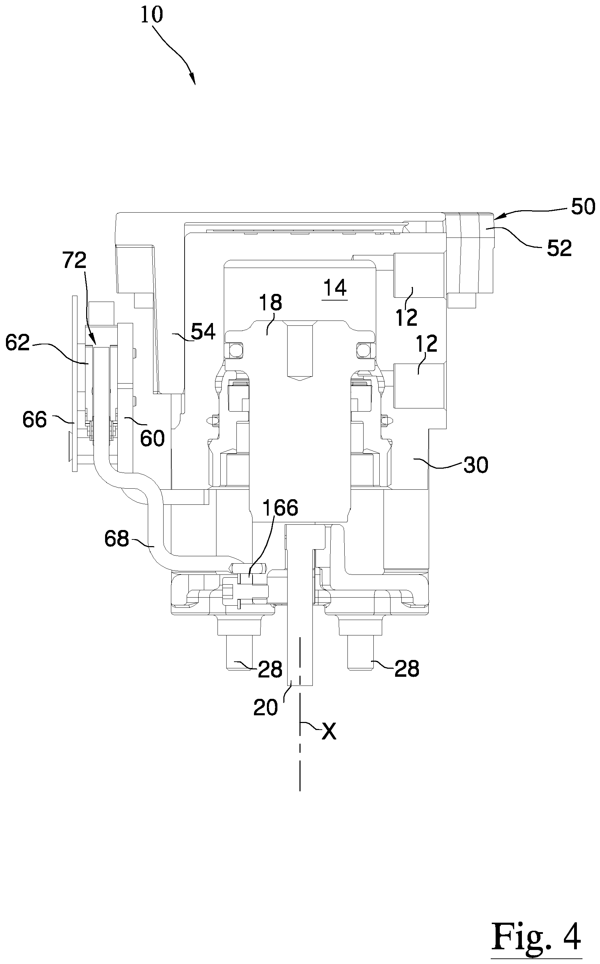

- Fig. 4 shows a vertical cross-sectional view of the actuator in Fig. 1.

In the figures equal elements are indicated by equal numbers, and, to avoid crowding the drawings, sometimes only some numbers are shown.

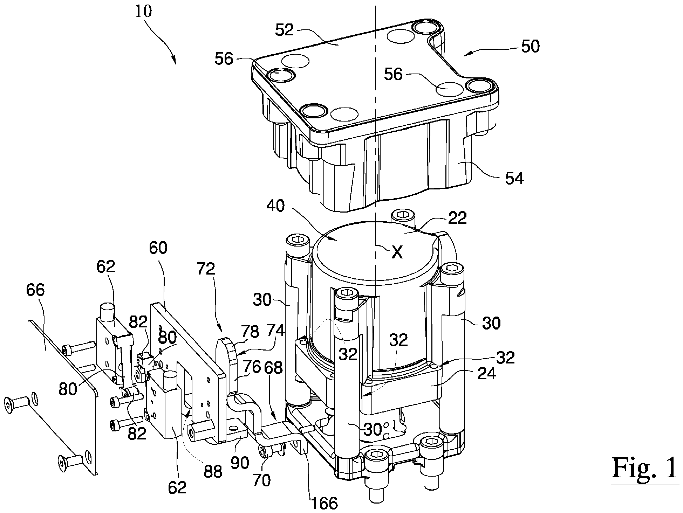

Fig. 1 shows an actuator 10 operable in known manner by a pressurized fluid (e.g. oil or air) pushed alternately, through two inlets 12, into a chamber 14 in which a piston 18 is translatable. The linear displacement of the piston 18 causes the alternating motion, along an X axis, of a shutter 20 connected to it. The shutter 20 in known manner regulates the flow of molten material exiting a nozzle toward a mold cavity (not shown).

The actuator 10 comprises a cylindrical central body 22 and a flange 24, and is attached to the surface of a distributor or manifold 98 by means of a plate 26 and screws 28. From the plate 26 rise four parallel columns 30 that are arranged at the vertices of a square. The body 22 is placed at the center of the square and is attached to the top of the columns 30, while the flange 30 has four recesses 32 to accommodate the columns 30.

A passive heat-sink 50, formed of a plate 52 and a skirt 54, is mounted on the top part 40 of the body 22 as a lid. The skirt 54, which follows the outer profile of the body 22 and the columns 30 in a complementary manner, defines a cavity to house the head of the body 22. The skirt 54 follows the outer profile of the body 22 and the columns 30 touching both at least over 90 degrees around the X axis.

By construction, then, the heat-sink 50 is displaceable vertically relative to the actuator 10 along an axis parallel to the X axis.

To maximize heat transfer from the actuator 10 to the heat-sink 50, and then to the plate 96, it is good to increase the contact area of the skirt 54, and e.g. in the example shown there is contact or near-contact over 270 degrees.

Magnets 56 are mounted on the surface of the plate 52 opposite the body 22 to attract and fix the heat-sink 50 to a plate 96 positioned at a short distance above the actuator 10. In this way, the heat generated by the manifold 98 transmitted to the actuator 10 is dissipated by direct contact toward the plate 96 through the heat-sink 50.

Preferably, between the skirt 54 and said outer profile there is a small play to easily allow relative vertical movement when the magnets draw the heat-sink 50 toward the plate 96. Heat transfer from the body 22 to the skirt 54 is by direct contact and/or through a thin layer of air.

The heat-sink 50 may be made as a single piece (as shown in the figures) but, in order to optimize its production and accurately copy the external profile of the actuator 10, it may be an element formed by the joining of several assembled parts.

The actuator 10 also comprises a preferred end-of-travel position detection system for the piston 18.

Attached next to the body 22 is a support plate 60 on which two switches or micro-switches 62 are mounted with respective pushbuttons 64 opposing each other. The detected end-of-travel position may also be only the one relative to the shutter opening or closing, and therefore there is only one micro-switch 62.

One end 166 of a lever 68 is fixed, e.g. by means of a screw 70, to the lower part of the piston 18. At the opposite end 72 the lever 68 exhibits a side cam profile 74 (spoon profile), i.e. the end 72 ends with a widening 76 on opposite sides and a rounding 78 at the tip thereof.

The micro-switches 62 are selectively operable by the contact with the end 72. To facilitate the operation and assembly of the lever 68, the support plate 60 in a preferred variant has a pass-through opening 88 at the center thereof, on either side of which the micro-switches 62 are attached.

To facilitate its own assembly, the support plate 60 in a preferred variant has two fins 90 curved outward at 90 degrees in the same direction, and e.g. is placed at the sides of the pass-through opening 88. The fins 90 are connected to the flange 24 and also serve as a spacer element. The ends 66, 72 are flat parts lying in parallel planes, and in space the lever 68 is curved as two S or Z joined together at one end. Thus the lever 68 develops spatially from the piston 18 to arrive in the space comprised between the two buttons 64 by passing through the pass-through opening 88.

Since the lever 68 is integral with the piston 18, it shares the translation thereof, and consequently the end 72 moves back and forth between the micro-switches 62. At its two opposite end-of-travel positions the lever 68, via the widening 76, alternately pushes one of the buttons 64 to activate the corresponding micro-switch 62 and signal that an end-of-travel position of the piston 18 has been reached. This allows the end-of-travel position of the piston 18 to be determined and/or programmed.

To better operate the buttons 64, the micro-switches 62 comprise, for example, an oscillating metal lamina 80 at the end of which is attached a small wheel 82 adapted to closely follow the profile 74. When the profile 74 meets the small wheel 82 it moves the lamina 80 and operates the button 64.

The micro-switches 62 are covered and protected by a cover plate 66, fixed to the support plate with spacer elements.

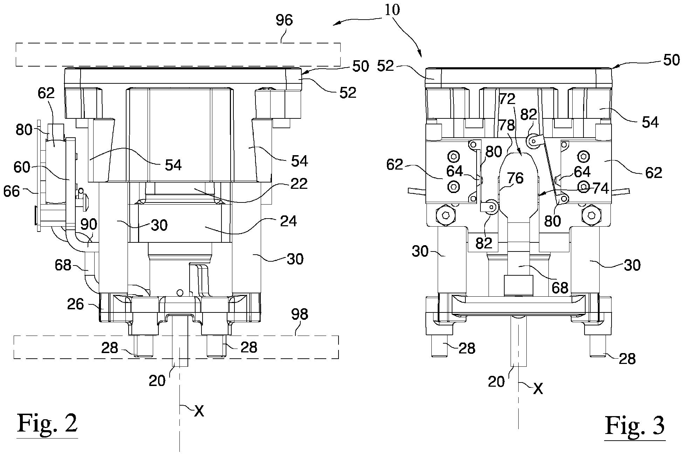

Advantageously, the skirt 54 may extend so as to interpose itself between the micro-switches 62 (fig. 2) and the body 22, e.g. as far as it touches the lever 68 (when the actuator is not installed), so as to create an additional heat shield for the micro-switches 62.

## Claims

1. Actuator for regulating the flow of molten plastic material exiting a nozzle towards a mold cavity, comprising:
• a body that defines an internal chamber with an outlet,
• a piston which is linearly translatable within the internal chamber along an axis and has a stem coming out from said outlet to drive a shutter of the nozzle;
• an electric switch for detecting a stroke end-position of the piston;
• a lever which is integral with the stem and which extends up to the switch to activate it or not as a function of the position of the piston,
• a heat sink mounted on the body at one side of the body opposite said outlet.

2. Actuator according to claim 1, wherein the heat-sink comprises a flat plate and a skirt, the skirt extending orthogonally to the plate and defining a cavity in which said opposite side of the body is housed.

3. Actuator according to claim 2, wherein the flat plate has a flat surface which faces the outside of the actuator and comprises one or more magnets for attaching to a metal object.

4. Actuator according to claim 2 or 3, wherein the skirt is shaped for surrounding said opposite side over at least 90 degrees around said axis.

5. Actuator according to claim 2 or 3 or 4, wherein the skirt is shaped to extend along the body interposing between the body and the electrical switch.

6. Actuator according to any preceding claim, comprising a support plate fixed to the body, the switch being mounted on the support plate.

7. Actuator according to claim 6, wherein the support plate is fixed to the body by means of extensions or fins provided on the support plate, the extensions or fins being bent at 90 degrees.

8. Actuator according to claim 6 or 7, wherein the support plate has a pass-through opening at its center, the lever having a portion positioned to slide into the pass-through opening and the switch being fixed at one side of the pass-through opening.

9. Actuator according to any preceding claim, wherein the lever comprises or consists of a succession of portions, curved at 90 degrees in alternating coplanar directions, forming a stepped structure.

10. Actuator according to any preceding claim, wherein the heat-sink is displaceable with respect to the actuator along said axis.
